(19) Europäisches Patentamt
European Patent Office
Office européen des brevets

(11) Veröffentlichungsnummer: **0 255 905 B1**

(12) # EUROPÄISCHE PATENTSCHRIFT

(45) Veröffentlichungstag der Patentschrift: **13.03.91**

(51) Int. Cl.5: **C08K 5/09**, C08K 5/16, C08J 9/00, C08G 18/65

(21) Anmeldenummer: **87110844.5**

(22) Anmeldetag: **27.07.87**

(54) **Trennmittelkomposition, diese Trennmittelkomposition enthaltende Gemische, ein Verfahren zur Herstellung von elastischen Formkörpern und die nach diesem Verfahren erhaltenen Formkörper.**

(30) Priorität: **07.08.86 DE 3626673**

(43) Veröffentlichungstag der Anmeldung:
**17.02.88 Patentblatt 88/07**

(45) Bekanntmachung des Hinweises auf die Patenterteilung:
**13.03.91 Patentblatt 91/11**

(84) Benannte Vertragsstaaten:
**AT BE CH DE ES FR GB IT LI NL SE**

(56) Entgegenhaltungen:
**EP-A- 0 004 309**
**WO-A-86/01215**
**US-A- 4 581 386**

(73) Patentinhaber: **BAYER AG**
**W-5090 Leverkusen 1 Bayerwerk(DE)**

(72) Erfinder: **Weber, Christian, Dr.**
**Paul-Klee-Strasse 68a**
**W-5090 Leverkusen 1(DE)**
Erfinder: **Haas, Peter, Dr.**
**Zwengenberger Strasse 43**
**W-5657 Haan 1(DE)**

EP 0 255 905 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine neue Trennmittelkomposition zur Herstellung von Formkörpern auf Polyurethan- oder Polyharnstoffbasis mit selbsttrennenden Eigenschaften, ein diese Komposition enthaltendes Gemisch von Verbindungen mit gegenüber Isocyanatgruppen reaktionsfähigen Gruppen, ein Verfahren zur Herstellung von elastischen Formkörpern mit einer geschlossenen Oberflächenschicht unter Verwendung dieser Gemische und die nach diesem Verfahren erhaltenen Formkörper.

Die Herstellung von elastischen Formkörpern auf Basis von Polyurethanen oder von Polyharnstoffen durch Umsetzung in geschlossenen Formen von Reaktionsgemischen aus einer Polyisocyanatkomponente, höhermolekularen Verbindungen mit gegenüber Isocyanatgruppen reaktionsfähigen Gruppen, niedermolekularen Kettenverlängerungsmitteln und den üblichen Hilfs- und Zusatzmitteln ist beispielsweise aus DE-AS 2 622 951 oder EP-B-0081 701 bekannt. Bei diesen Verfahren des Standes der Technik werden die besagten Reaktionsgemische im allgemeinen nach dem Prinzip der Reaktionsspritzgußtechnik hergestellt und unmittelbar nach ihrer Herstellung in die jeweilige Form eingetragen. Nach einer im allgemeinen sehr kurzen Formstandzeit werden die resultierenden Formkörper entformt. Für die praktische Durchführbarkeit dieses Verfahrens, insbesondere für eine großtechnische Serienproduktion der entsprechenden Formteile, spielt die leichte Entformbarkeit der Formkörper eine ausschlaggebende Rolle. In diesem Zusammenhang spielt neben der Verwendung von "äußeren Trennmitteln", d. h. von Trennmittelkompositionen, mit denen die Form vor Befüllen beschichtet wird, die Verwendung von sogenannten "inneren Formtrennmitteln" eine ausschlaggebende Rolle. "Innere Formtrennmittel" sind Substanzen, die dem Reaktionsgemisch einverleibt werden und zur Folge haben, daß die resultierenden Formkörper eine geringere Haftung an der Formoberfläche aufweisen, als dies ohne Verwendung derartiger Trennmittel der Fall wäre. Für die Herstellung von elastischen Formkörpern, insbesondere einer Dichte innerhalb des Bereichs von 0,8-1,4 g/cm$^3$, haben sich Kombinationen aus Zinksalzen langkettiger Carbonsäuren, insbesondere aus Zinkstearat und bestimmten, tertiäre Aminstickstoffatome aufweisenden organischen Verbindungen, als sehr gut geeignet erwiesen. Eine typische, derartige Verbindung mit tertiären Aminstickstoffatomen ist beispielsweise das Anlagerungsprodukt von ca. 5 Mol Propylenoxid an 1 Mol Ethylendiamin. Diese tert. Aminstickstoffatome aufweisenden Verbindungen stellen Lösungsmittel für das im allgemeinen schwer lösliche Zinksalz dar und bewirken gleichzeitig eine gewisse Löslichkeit des Zinkstearats in den Gemischen aus Verbindungen mit gegenüber Isocyanatgruppen reaktionsfähigen Gruppen, die die Reaktionspartner für die Polyisocyanate darstellen. Derartige Trennmittelkompositionen und ihre Verwendung bei der Herstellung von elastomeren Formkörpern sind beispielsweise in den US-Patenten 4 519 965, 4 581 386 oder 4 585 803 beschrieben.

Ein Nachteil dieser Trennmittelkompositionen des Standes der Technik besteht jedoch darin, daß die löslichkeitsvermittelnde Wirkung nur begrenzt ist, was sich darin äußert, daß Gemische von Verbindungen mit gegenüber Isocyanatgruppen reaktionsfähigen Gruppen, der bei dem genannten Verfahren eingesetzten Art, denen die Trennmittelkompositionen des Standes der Technik zugesetzt worden sind, tunlichst unmittelbar nach dem Zusatz der Trennmittelkomposition verarbeitet werden müssen, da bei einem längeren Lagern der Gemische die Trennwirkung deutlich abfällt. In der Praxis werden daher die Trennmittelkompositionen den Verbindungen mit gegenüber Isocyanatgruppen reaktionsfähigen Gruppen im allgemeinen erst kurz vor der Herstellung der Formkörper zugesetzt. Diese Feststellung gilt im übrigen auch für Trennmittelkompositionen, bestehend aus Zinksalzen, insbesondere Zinkstearat und Verbindungen mit primären Aminogruppen, wie sie beispielsweise in der EP-A-0 119 471 empfohlen werden.

Es war die der Erfindung zugrunde liegende Aufgabe, neue Trennmittelkompositionen zur Verfügung zu stellen, die nicht mit dem genannten Nachteil eines deutlichen Abfalls der Trennwirkung beim Lagern der gebrauchsfertigen Gemische behaftet sind.

Diese Aufgabe konnte mit der Bereitstellung der nachstehend näher beschriebenen erfindungsgemäßen Trennmittelkompositionen gelöst werden. In diesen erfindungsgemäßen Trennmittelkompositionen liegen als Lösungsmittel bzw. als Verträglichkeitsvermittler für das Zinksalz, insbesondere Zinkstearat, bestimmte, ausgewählte tert. Amine der nachstehend näher genannten Art vor. Die erfindungsgemäßen Trennmittelkompositionen zeichnen sich insbesondere durch eine Kombination folgender Vorteile aus:

1. Die mit den neuen Trennmittelkompositionen erzielbare Trennwirkung ist der Trennwirkung, die mit den Trennmittelkompositionen des genannten Standes der Technik erzielbar ist, zumindest ebenbürtig.
2. Gemische von Verbindungen mit gegenüber Isocyanatgruppen reaktionsfähigen Gruppen, wie sie zur Herstellung von elastomeren Formkörpern eingesetzt werden, und die die erfindungsgemäßen Trennmittelkompositionen enthalten, brauchen nicht sofort nach ihrer Herstellung (Zusatz der Trennmittelkomposition zu den anderen Komponenten) verarbeitet zu werden, da die gebrauchsfertigen Mischungen die Herstellung von Formkörpern mit sehr guten selbsttrennenden Eigenschaften weitgehend unabhängig von einer gegebenenfalls stattgefundenen Zwischenlagerung gestatten. In der Praxis hat dies zur Folge,

daß der Hersteller der Formkörper nicht mehr darauf angewiesen ist, die gebrauchsfertige, Formtrennmittel enthaltende Mischung in kurzen Zeitabständen durch Abmischung einer Trennmittelkomposition mit den übrigen Verbindungen frisch zuzubereiten.

Gegenstand der Erfindung sind Trennmittelkompositionen, bestehend im wesentlichen aus einer bei Raumtemperatur flüssigen Lösung von

(i) mindestens einem Zinksalz einer verzweigten oder unverzweigten, gesättigten oder ungesättigten aliphatischen Carbonsäure mit 8 - 24 Kohlenstoffatomen

in

(ii) mindestens einer bei Raumtemperatur flüssigen, tertiäre Stickstoffatome aufweisenden organischen Verbindung,

wobei das Zinksalz in einer Menge von 10-75 Gew.-%, bezogen auf das Gesamtgewicht der Komposition, vorliegt, dadurch gekennzeichnet, daß die Komponente (ii) aus mindestens einer Verbindung der Formel

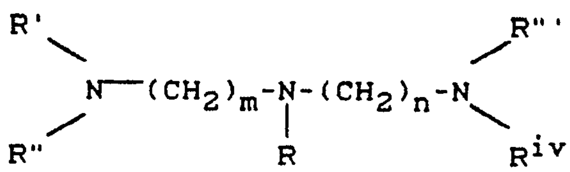

besteht, in welcher

R′, R″, R‴ und $R^{iv}$ für gleiche oder verschiedene Reste stehen und Alkylreste mit 1-4 Kohlenstoffatomen bedeuten, oder wobei jeweils zwei der Reste R′ und R″ bzw. R‴ und $R^{iv}$ zusammen mit dem Stickstoffatom einen, gegebenenfalls ein Sauerstoffatom oder ein Alkyl-substituiertes Stickstoffatom als Heteroatome aufweisenden heterocyclischen Ring mit 6 Ringatomen und insgesamt 4 oder 5 Kohlenstoffatomen bilden können,

R für Wasserstoff oder einen Rest der Formel

$-(CH_2)_o-NH_2$

steht, und

m, n und o für gleiche oder verschiedene ganze Zahlen von 2 bis 6 stehen.

Gegenstand der Erfindung ist auch ein als Reaktionspartner für Polyisocyanate geeignetes Gemisch, bestehend aus

a) mindestens einer organischen Verbindung mit mindestens 2 gegenüber Isocyanatgruppen reaktionsfähigen Gruppen des Molekulargewichtsbereichs 400 -12.000,

b) mindestens einer im Sinne der Isocyanat-Additionsreaktion difunktionellen, organischen Verbindung mit gegenüber Isocyanatgruppen reaktionsfähigen Wasserstoffatomen des Molekulargewichtsbereichs 62- 399, in einer Menge von 5-50 Gew.-%, bezogen auf das Gewicht der Komponente a),

c) mindestens einem Formtrennmittel

und gegebenenfalls

d) weiteren, an sich bekannten Hilfs- und Zusatzmitteln,

dadurch gekennzeichnet, daß die Komponente c) aus einer erfindungsgemäßen Trennmittelkomposition der oben genannten Art besteht.

Gegenstand der Erfindung ist auch ein Verfahren zur Herstellung von elastischen Formkörpern mit einer geschlossenen Oberflächenschicht aus Polyurethan- oder Polyharnstoffelastomeren durch Umsetzung in geschlossenen Formen eines Reaktionsgemisches aus

A) einer Polyisocyanatkomponente, bestehend aus mindenstens einem Di- oder Polyisocyanat mit ausschließlich aromatisch gebundenen Isocyanatgruppen

mit

B) einer, innere Formtrennmittel und Verbindungen mit gegenüber Isocyanatgruppen reaktionsfähigen Gruppen, sowie gegebenenfalls weitere Hilfs- und Zusatzmittel enthaltenden, Reaktionskomponente,

dadurch gekennzeichnet, daß man als Komponente B) ein Gemisch der vorstehend genannten Art verwendet.

Gegenstand der Erfindung sind schließlich auch die nach diesem Verfahren erhaltenen Formkörper.

Der Begriff "Polyurethan" umfaßt im Rahmen der vorliegenden Erfindung auch Harnstoffgruppen aufweisende Polyurethane. Der Begriff "Polyharnstoff" umfaßt lediglich Urethangruppen-freie Polyharnstoffe. Die Aussage "bestehend im wesentlichen" bei der Beschreibung der erfindungsgemäßen Trennmittelkompositionen soll lediglich zum Ausdruck bringen, daß die "wesentlichen" Komponenten die Komponenten (i)

und (ii) darstellen. Die Aussage soll nicht ausschließen, daß in den Kompositionen auch noch andere Bestandteile, wie beispielsweise aromatische Diamine der nachstehend und $b^2$) genannten Art und/oder tert.-Aminogruppen aufweisende Polyetherpolyole, beispielsweise das Anlagerungsprodukt von 5 Mol Propylenoxid an 1 Mol Ethylendiamin und/oder primäre Aminogruppen aufweisende Polyether, beispielsweise endständige Aminogruppen aufweisende Polypropylenoxide des Molekulargewichtsbereichs 200 bis 600 vorliegen.

Bei der Komponente (i) der erfindungsgemäßen Trennmittelkomposition handelt es sich um mindestens ein Zinksalz einer organischen, gegebenenfalls verzweigten und/oder gegebenenfalls olefinisch ungesättigten Carbonsäure mit 8-24 Kohlenstoffatomen. Geeignete Zinksalze sind beispielsweise Zinkoctoat, -stearat, -oleat, -palmitat, -laurat oder beliebige Gemische derartiger Zinksalze. Besonders bevorzugt handelt es sich bei der Komponente (i) der erfindungsgemäßen Trennmittelkomposition um Zinkstearat.

Bei der Komponente (ii) der erfindungsgemäßen Trennmitelkomposition handelt es sich um tert. Aminogruppen aufweisende Verbindungen der obengenannten allgemeinen Formel. Vorzugsweise werden solche Verbindungen der obengenannte allgemeinen Formel eingesetzt, für welche R′, R″, R‴ und $R^{iv}$ jeweils für Methylgruppen, m und n für gleiche Zahlen stehen und 2 oder 3 bedeuten und R für Wasserstoff oder den Rest der Formel $-(CH_2)_o-NH_2$ mit o für 2 oder 3 steht.

Typische Beispiele für geeignete bzw. bevorzugte geeignete tert. Aminoverbindungen sind die nachstehend genannten Verbindungen der Formeln I bis VIII

I

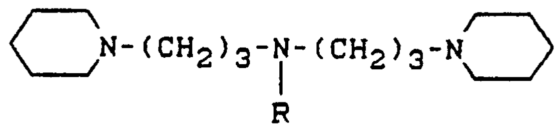

R = H, $-(CH_2)_3-NH_2$

II

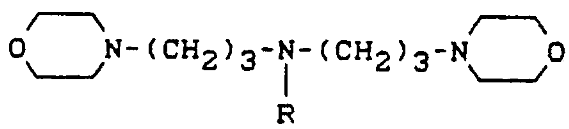

R = H, $-(CH_2)_3-NH_2$

III

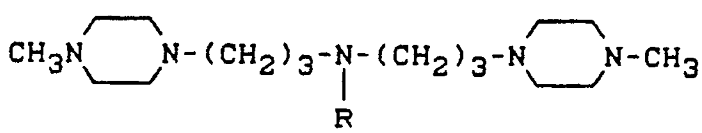

R = H, $-(CH_2)_3-NH_2$

IV

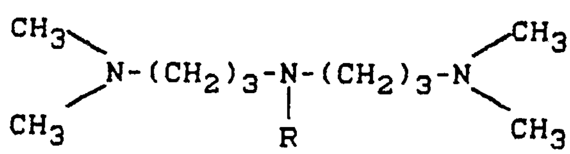

R = H, $-(CH_2)_3-NH_2$

V

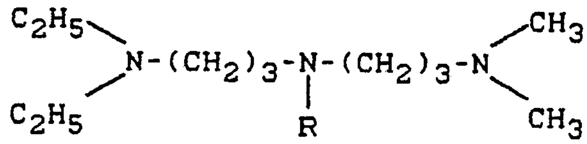

R = H, $-(CH_2)_3-NH_2$

VI

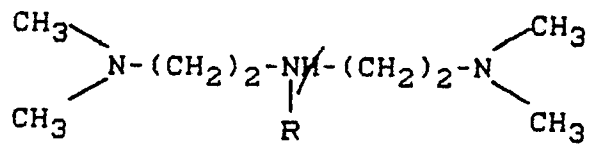

R = H, $-(CH_2)_2-NH_2$

VII

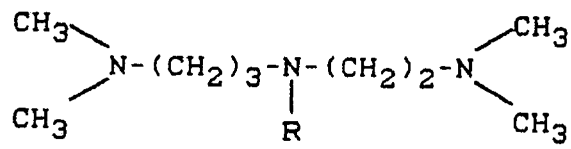

R = H, $-(CH_2)_3-NH_2$

VIII

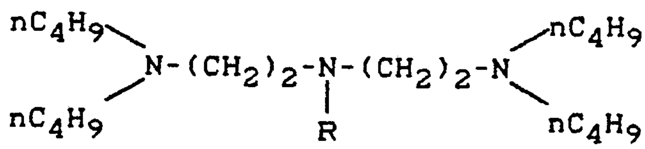

R = H, $-(CH_2)_2-NH_2$

Auch beliebige Gemische derartiger tert. Aminoverbindungen können eingesetzt werden. Die Verbindungen der Formeln IV und VI mit R jeweils = H sind besonders bevorzugt. vorzugt.

In den erfindungsgemäßen Trennmittelkompositionen liegen die Einzelkomponenten (i) und (ii) in solchen Mengen vor, daß der Gewichtsanteil des Zinksalzes, bezogen auf das Gesamtgewicht der Komposition, bei 10-75, vorzugsweise 40-60 Gew.%, liegt.

Die Herstellung der Trennmittelkompositionen erfolgt durch einfaches Vermischen der Einzelkomponenten bei Raumtemperatur oder mäßig erhöhter Temperatur. Es resultieren klare Lösungen des Zinksalzes in den Verbindungen mit tert. Aminogruppen.

In den erfindungsgemäßen Gemischen von Verbindungen mit gegenüber Isocyanatgruppen reaktionsfähigen Gruppen liegen die obengenannten Einzelkomponenten a), b), c) und gegebenenfalls zusätzlich weitere Hilfs- und Zusatzmittel d) vor.

Bei der Komponente a) handelt es sich in allgemeinen um Polyether des Molekulargewichtsbereichs 400-12.000, vorzugsweise 1.800-12.000, und insbesondere 2.000-6.000, welche 2 bis 3 gegenüber Isocyanatgruppen reaktionsfähigen Gruppen aufweisen. Es können auch entsprechende Polyethergemische verwendet werden, die im statistischen Mittel 2 bis 3 gegenüber Isocyanatgruppen reaktionsfähige Gruppen

aufweisen. Bei den gegenüber Isocyanatgruppen reaktionsfähigen Gruppen handelt es sich um solche, die ausgewählt sind aus der Gruppe bestehend aus primären Hydroxylgruppen, sekundären Hydroxylgruppen und primären Aminogruppen, welche ihrerseits sowohl an aliphatische also auch an aromatische Kohlenstoffatome gebunden sein können. Es können beliebige Gemische derartiger Verbindungen mit gegenüber Isocyanatgruppen reaktionsfähigen Gruppen verwendet werden, es ist auch möglich, solche Polyether zu verwenden, deren gegenüber Isocyanatgruppen reaktionsfähige Gruppen zum Teil aus Hydroxylgruppen und zum Teil aus Aminogruppen der genannten Art bestehen. Vorzugsweise handelt es sich bei der Komponente a) bzw. bei den Einzelbestandteilen der Komponente a) um Polyetherpolyole mit vorwiegend (mehr als 50 %, insbesondere mehr als 80 %, bezogen auf alle Hydroxylgruppen) primären Hydroxylgruppen oder um Polyether, deren gegenüber Isocyanatgruppen reaktionsfähige Gruppen aus aromatisch gebundenen primären Aminogruppen bestehen.

Als Komponente a) kommen somit sowohl Polyetherpolyole der in DE-AS 2 622 951 beschriebenen Art als auch Polyetherpolyole der in EP-B 0 017 928 genannten Art als auch Polyetherpolyole der in EP-B-0 044 481 genannten Art als auch beliebige Gemische derartiger Polyetherpolyole als auch Aminogruppen und gegebenenfalls Hydroxylgruppen aufweisende Polyether der in EP-B-0 081 701 genannten Art in Betracht, wobei unter den letztgenannten Polyethern mit Aminogruppen solche bevorzugt werden, die beispielsweise gemäß DE-OS 2 948 419 durch Hydrolyse von endständigen Isocyanatgruppen aufweisenden Verbindungen erhalten werden.

Bei der Komponente b) handelt es sich um Kettenverlängerungsmittels des Molekulargewichtsbereichs 62-399, d. h. insbesondere um in Sinne der Isocyanat-Additionsreaktion difunktionelle Verbindungen mit primären alkoholischen Hydroxylgruppen oder mit aromatisch gebundenen primären Aminogruppen. Grundsätzlich ist es auch möglich, daß die Komponente b) zwecks Sicherstellung einer gegebenenfalls erwünschten Verzweigung der resultierenden Polyurethane bzw. Polyharnstoffe eine untergeordnete Menge an höher als difunktionellen Verbindungen enthält.

Geeignete Kettenverlängerungsmittel b) sind beispielsweise

$b^1$) Polyhydroxylverbindungen des genannten Molekulargewichtsbereichs wie Ethylenglykol, Propylenglykol, Diethylenglykol, Dipropylenglykol, 1,3-Dihydroxipropan, 1,4-Dihydroxibutan, 1,6-Dihydroxihexan, Trimethylolpropan oder Glyzerin;

$b^2$) aromatisch gebundene primäre Aminogruppen aufweisende Diamine wie 1,4-Diaminobenzol, 2,4-Diaminotoluol, 2,4'-und/oder 4,4'-Diaminodiphenylmethan, oder vorzugsweise um solche aromatische Diamine, die zumindest in jeweils einer ortho-Stellung zu den Aminogruppen einen Alkylsubstituenten aufweisen, insbesondere solche, die in ortho-Stellung zu der ersten Aminogruppe mindestens einen Alkylsubstituenten und in ortho-Stellung zur zweiten Aminogruppe zwei Alkylsubstituenten mit jeweils 1-4 Kohlenstoffatomen aufweisen, besonders bevorzugt solche, die in jeweils mindestens einer ortho-Stellung zu den Aminogruppen einen Ethyl-, n-Propyl-und/oder Isopropylsubstituenten und gegebenenfalls in weiteren ortho-Stellungen zu den Aminogruppen Methylsubstituenten aufweisen.

Beispiele für derartige bevorzugte bzw. besonders bevorzugte Diamine sind 2,4-Diaminomesitylen, 1,3,5-Triethyl-2,4-diaminobenzol, 1,3,5-Triisopropyl-2,4-diaminobenzol, 1-Methyl-3,5-diethyl-2,4-diaminobenzol, 1-Methyl-3,5-diethyl-2,6-diaminobenzol, 4,6-Dimethyl-2-ethyl-1,3-diaminobenzol, 3,5,3',5'-Tetraisopropyl-4,4'-diaminodiphenylmethan oder beliebige Gemische derartige Diamine. Ganz besonders bevorzugt werden 1-Methyl-3,5-diethyl-2,4-diaminobenzol oder dessen technische Gemische mit 1-Methyl-3,5-diethyl-2,6-diaminobenzol, die bis zu 35 Gew.-%, bezogen auf das Gemisch des letztgenannten Isomeren enthalten können, eingesetzt.

Grundsätzlich ist es auch möglich, Diamine der beispielhaft genannten Art in Abmischung mit Polyhydroxylverbindungen der beispielhaft genannten Art als Komponente b) zu verwenden.

Die Komponente b) liegt in den erfindungsgemäßen Gemischen im allgemeinen in einer Menge von 5-50, vorzugsweise 12-26 Gew.-%, bezogen auf das Gewicht der Komponente a), vor.

Bei der Komponente c) der erfindungsgemäßen Gemische handelt es sich um erfindungsgemäße Trennmittelkompositionen der oben beschriebenen Art. Diese Trennmittelkompositionen liegen in den erfindungsgemäßen Gemischen in solchen Mengen vor, daß auf 100 Gew.-Teile der Komponente a) 0,5-10 Gew.-Teile, vorzugsweise 1-4 Gew.-Teile, Zinkstearat entfallen.

Bei der gegebenenfalls in den erfindungsgemäßen Gemischen vorliegenden Hilfs- und Zusatzmitteln d) handelt es sich um solche der an sich bekannten Art, wie sie beispielsweise in EP-B-0 081 701, Kolonne 6, Zeile 40 -Kolonne 9, Zeile 31, beschrieben sind. Besonders hervorzuheben sind

$d^1$) Formtrennmittel des Standes der Technik, wie sie beispielsweise in DE-OS 1 953 637, DE-OS 2 121 670, DE-OS 2 431 968, DE-OS 2 404 310, DE-OS 2 319 648, DE-OS 2 356 692, DE-OS 2 363 452, DE-OS 2 427 273 oder DE-OS 2 431 968 beschrieben sind und die gegebenenfalls neben der erfindungswesentlichen Trennmittelkomponente c) mitverwendet werden können. Auch die gleichzeitige Mitverwendung von inneren Formtrennmitteln der in US-PS 4 519 965 oder US-PS 4 581 386 beschriebenen Art ist prinzipiell möglich. Dies bedeutet insbesondere, daß in den erfindungsgemäßen Trennmittelkompositionen c) neben den wesentlichen Komponenten (i) und (ii) auch die in diesen Vorveröffentlichungen beschriebenen Verträglichkeitsmacher ("compatibilizer") vorliegen können. So kann es beispielsweise zweckmäßig sein, neben der erfindungswesentlichen Komponente (ii) in den erfindungsgemäßen Trennmittelkompositionen Amin-gestartete Polyetherpolyole, beispielsweise das Additionsprodukt von 5 Mol Propylenoxid auf 1 Mol Ethylendiamin und/oder Polyetherpolyamine mit primären Aminogruppen wie z.B. endständige Aminogruppen aufweisende Polypropylenoxide des Molekulargewichtsbereichs 200 bis 600 mitzuverwenden, wobei derartige Verbindungen beispielsweise in Mengen bis zu 500 Gew.-%, vorzugsweise bis zu 200 Gew.-%, bezogen auf das Gewicht der Komponente (ii) zum Einsatz gelangen können. Falls derartige Zusatzmittel d) eingesetzt werden, können diese, wie gesagt, bereits der Trennmittelkomposition c) einverleibt werden, welche anschließend zur Herstellung der Gemische aus a), b), c) und d) verwendet wird.

$d^2$) Katalysatoren für die Isocyanat-Polyadditionsreaktion, insbesondere tert. Amine oder organische Zinnverbindungen der in EP-B 0 081 701 beispielhaft genannten Art, die insbesondere dann in Mengen von 0,01-10, vorzugsweise 0,05-2 Gew.-%, bezogen auf das Gewicht der Komponente a), mitverwendet werden, wenn es sich bei der Komponente a) vorwiegend oder ausschließlich um Polyetherpolyole der oben beispielhaft genannten Art handelt. Im Falle der ausschließlichen Verwendung von Aminogruppen aufweisenden Verbindungen als Komponente a) und b) ist die Mitverwendung von Katalysatoren zwar möglich, im allgemeinen jedoch überflüssig.

Bei der Herstellung der erfindungsgemäßen Gemische können die Komponenten a) bis d) in beliebiger Reihenfolge miteinander vermischt werden. So ist es beispielsweise möglich, zunächst aus der Komponente c) und zumindest einem Teil der Komponente b), beispielsweise einem aromatischen Diamin der genannten Art, eine "Vormischung" herzustellen und diese anschließend, d.h. zu einem beliebig späteren Zeitpunkt mit den anderen Komponenten zu vermischen.

Bei der Durchführung des erfindungsgemäßen Verfahrens werden die erfindungsgemäßen, die erfindungsgemäßen Trennmittelkompositionen enthaltenden Gemische von Verbindungen mit gegenüber Isocyanatgruppen reaktionsfähigen Gruppen mit organischen Polyisocyanaten A) zur Reaktion gebracht. Geeignete Polyisocyanate A) sind solche mit ausschließlich aromatisch gebundenen Isocyanatgruppen, wie sie beispielsweise in EP-B 0 081 701, Kolonne 3, Zeile 30, bis Kolonne 4, Zeile 25, beschrieben sind.

Ganz besonders bevorzugt handelt es sich bei der Komponente A) um bei Raumtemperatur flüssige, gegebenenfalls Urethangruppen und/oder Carbodimidgruppen und/oder Uretonimingruppen aufweisende Polyisocyanate oder Polyisocyanatgemische der Diphenylmethanreihe. Unter "Polyisocyanaten bzw. Polyisocyanatgemischen der Diphenylmethanreihe" sind hierbei sowohl Polyisocyanatgemische zu verstehen, die in an sich bekannter Weise durch Phosgenierung von Anilin/Formaldehyd-Kondensaten zugänglich sind als auch Diisocyanat-Fraktionen, wie sie destillativ aus diesen Gemischen abgetrennt werden können. Zu den ganz besonders bevorzugten Polyisocyanaten A) gehören die bei Raumtemperatur flüssigen Derivate des 4,4'-Diisocyanato-diphenylmethan, beispielsweise die Urethangruppen aufweisenden Polyisocyanate, die gemäß DE-PS 1 618 380 durch Umsetzung von 1 Mol 4,4'-Diisocyanate-diphenylmethan mit 0,05-0,3 Mol an niedermolekularen Diolen oder Triolen, vorzugsweise Polypropylenglykolen mit einem unter 700 liegenden Molekulargewicht zugänglich sind, oder Carbodimid-und/oder Uretonimingruppen aufweisenden Diisocyanate auf Basis von 4,4'-Diisocyanate-diphenylmethan, wie sie beispielsweise gemäß US-PS 3 152 162, 3 384 653, 3 429 256, DE-OS 2 537 685 oder EP-A-5233 zugänglich sind. Auch die entsprechenden Modifizierungsprodukte auf Basis von Gemischen aus 2,4'- und 4,4'-Diisocyanatodiphenylmethan oder auch Gemische der, wie beschrieben, modifizierten 4,4'-Diisocyanato-diphenylmethane mit untergeordneten Mengen an höher als difunktionellen Polyisocyanaten der Diphenylmethanreihe, beispielsweise solche der in DE-OS 2 624 526 beschriebenen Art gehören zu den bevorzugten Polyisocyanaten.

Die beim erfindungsgemäßen Verfahren zum Einsatz gelangende Polyisocyanatkomponente A) wird mit der Komponente B), d. h. dem erfindungsgemäßen, die erfindungsgemäße Trennmittelkomposition enthaltenden Gemisch der gegenüber Isocyanatgruppen reaktionsfähigen Gruppen zur Reaktion gebracht. Hierbei wird die Menge der Polyisocyanatkomponente A) so bemessen, daß auf jede gegenüber Isocyanatgruppen reaktionsfähige Gruppe der Komponente B) 0,7-1,3, vorzugsweise 1,0-1,2, Isocyanatgruppen der Komponente A) (entsprechend einer NCO-Kennzahl von 70-130, vorzugsweise 100-120) entfallen. In diese Berechnung gehen auch die in der Komponente c) vorliegenden primären oder sekundären Aminogruppen, nicht jedoch die gegebenenfalls in zusätzlich mitverwendeten Trennmitteln vorliegenden Carboxylgruppen ein.

Bei der Durchführung des erfindungsgemäßen Verfahrens wird vorzugsweise nach der bekannten Reaktionspritzgußtechnik (RSG-Verfahren) gearbeitet. Die Einzelkomponenten A) und B) werden hierbei

vermischt und unmittelbar nach ihrer Durchmischung in die jeweilige Form eingebracht. Die Menge des in die Form eingebrachten, gegebenenfalls schäumfähigen Gemischs, wird im allgemeinen so bemessen, daß die Formkörper eine dichte von 0,25 -bis 1,4, vorzugsweise von 0,8-1,4 und insbesondere von 0,9-1,2 g/cm³ aufweisen. Insbesondere bei der Mitverwendung von mineralischen Füllstoffen können Formkörper mit einer über 1,2 g/cm³ liegenden Dichte resultieren. Aus den gemachten Dichteangaben ist bereits ersichtlich, daß es sich bei den erfindungsgemäßen Formkörpern vorzugsweise um massive bzw. allenfalls mikrozellulare Kunststoffe handelt. Die Formkörper können im allgemeinen in völliger Analogie zur Lehre der DE-AS 2 622 951 bzw. der EP-B-0 081 701 nach einer Formstandzeit von 5-90, vorzugsweise 20-60 Sekunden entformt werden.

Als Ausgangstemperatur des in die Form eingebrachten Gemischs wird im allgemeinen eine Temperatur zwischen 10 und 60, vorzugsweise 20 bis 50°C, gewählt. Die Temperatur der Form beträgt im allgemeinen 40-140, vorzugsweise 50-70° C.

Das erfindungsgemäße Verfahren eignet sich insbesondere zur Herstellung von hochwertigen elastomeren Formkörpern, die sich insbesondere zur Herstellung von flexiblen Automobilstoßstangen bzw. Karosserieelementen eignen.

Gegenüber den entsprechenden Formkörpern des Standes der Technik zeichnen sich die erfindungsgemäßen Formkörper durch eine im allgemeinen verbesserte Entformbarkeit aus, wobei diese verbesserte Entformbarkeit auch in jenen Fällen gegeben ist, in welchen die beim erfindungsgemäßen Verfahren eingesetzte Komponente B) nicht unmittelbar vor der Verarbeitung der Komponente B) durch Abmischung der erfindungsgemäßen Trennmittelkomposition mit den übrigen Bestandteilen hergestellt worden ist. Die vorzüglichen selbsttrennenden Eigenschaften der erfindungsgemäßen Formkörper sind vielmehr vom "Alter" der Komponente B) weitgehend unabhängig.

Beispiele

Die Verarbeitung der in den nachstehenden Beispielen eingesetzten Komponenten A) und B) erfolgte mit Hilfe der Reaktionsspritzgußtechnik [RSG oder englisch "reaction injection moulding" (RIM)].

Die Polyisocyanatkomponente und das Polyolgemisch werden einem Hochdruckaggregat zugeführt und nach intensiver Vermischung in einem zwangsgesteuerten Mischkopf in kürzester Zeit in ein Metallwerkzeug gedrückt.

Das Werkzeug - eine Schüsselform aus Werkzeugstahl - erlaubt die Herstellung eines Formteils der folgenden Abmessungen:

| | |
|---|---|
| Außendurchmesser Boden | 178 mm |
| Außendurchmesser Rand | 186 mm |
| Wandstärke | 4 mm |
| Formteilhöhe | 68 mm |
| Konizität | 3,50° |

Anguß: Quellanguß, mittig am Boden (ø = 10 mm)

Bei Entformung der Schüssel sind an den Wandflächen starke Scherkräfte zu überwinden. Zur Bestimmung der Aufreißkräfte dient ein Kraftaufnehmer mit Dehnungsmeßstreifen als Meßelement (Fa. Hottinger Baldwin Meßtechnik GmbH, D-6100 Darmstadt 1).

Die Temperatur der Rohstoffe beträgt 45°C, die Temperatur des Werkzeugs 65°C. Die Formstandzeit wird auf 20 sec und die Taktzeit auf 60 sec eingestellt.

Die Werkzeugoberfläche wird vor Herstellung des ersten Formteils mit einem handelsüblichen Trennmittel (RTCW 2006, Hersteller Chem-Trend International, 3205 E, Grand River, Howell, Michigan 48843/US) behandelt.

Beispiel 1

| | |
|---|---|
| 1,80 | Gew.-Teile Zinkstearat (Haro Chem ZGD, Hersteller: Haagen Chemie b.V., P.O. Box 14, 6040 AA Roermond/Holland)) werden in |
| 1,80 | Gew.-Teilen Bis-(3-dimethylaminopropyl)-amin gelöst und mit |
| 74,98 | Gew.-Teilen eines Polyethers der OH-Zahl 28, der durch Addition von Propylenoxid und anschließende Addition von Ethylenoxid an Trimethylolpropan erhalten wurde (Gewichtsverhältnis PO:EO = 83:17), |
| 20,70 | Gew.-Teilen einer Mischung aus 65 Gew.-Teilen 1-Methyl-3,5-diethylphenylendiamin-(2,4) und 35 Teilen 1-Methyl-3,5-diethylphenylendiamin-(2,6) |
| 0,18 | Gew.-Teilen Dimethylzinndilaurat und |
| 0,54 | Gew.-Teilen 1,4-Diazabicyclo-(2.2.2)-octan als 33 %ige Lösung (Dabco 33 LV, Air Products) |

zu einer Polyolkomponente vereinigt und mit 56,3 Gew,Teilen eines Umsetzungsproduktes aus Tripropylenglykol und 4,4'-Diphenylmethandiisocyanat (23 Gew,-% NCO) nach dem RSG-Verfahren verarbeitet.

Nach 50 Entformungen wurde die Versuchsreihe abgebrochen, Bei der letzten Entformung wurde eine Aufreißkraft von 7,7 kN gemessen (vgl. Tabelle).

Die Polyolformulierung wurde auf der RSG-Anlage belassen und nach 3 Tagen erneut geprüft. Es konnten mühelos 50 Entformungen durchgeführt werden, Bei der letzten entformung wurde eine Außreißkraft von 7,7 kN gemessen. Die Polyolformulierung war zu diesem Zeitpunkt klar, eine Trübung durch ausfallendes Zinkstearat nicht zu erkennen,

Beispiel 2 (Vergleich)

| | |
|---|---|
| 1,80 | Gew.-Teile Zinkstearat des in Beispiel 1 verwendeten Typs werden in |
| 1,80 | Gew.-Teilen eines Amin-gestarteten Poly(oxyalkylen)polyether Tetrols mit einer OHZ von ca. 630, erhalten durch Addition von ca. 5 Mol Propylenoxid auf ein Mol Ethylendiamin, gelöst und mit |
| 74,98 | Gew.-Teilen eines Polyethers der OH-Zahl 28, der durch Addition von Propylenoxid und anschließende Addition von Ethylenoxid an Trimethylolpropan erhalten wurde (Gewichtsverhältnis PO:EO = 83:17), |
| 20,70 | Gew.-Teilen einer Mischung aus 65 Gew.-Teilen 1-Methyl-3,5-diethylphenylendiamin-(2,4) und 35 Teilen 1-Methyl-3,5-diethylphenylendiamin-(2,6) |
| 0,18 | Gew.-Teilen Dimethylzinndilaurat und |
| 0,54 | Gew.-Teilen 1,4-Diazabicyclo-(2.2.2)-octan als 33 %ige Lösung (Dabco 33 LV, Air Products) |

zu einer klaren Polyolkomponente vereinigt und mit 58,4 Gew`-Teilen eines Umsetzungsproduktes aus Tripropylenglykol und 4,4'-Diphenylmethandiisocyanat (23 Gew.-% NCO) nach dem RSG-Verfahren verarbeitet,

Nach 50 Entformungen wurde die Versuchsreihe abgebrochen, Bei der letzten Entformung wurde eine Aufreißkraft von 11,9 kN gemessen (vgl. Tabelle).

Die Polyolformulierung wurde auf der RSG-Anlage belassen und nach einem Tag erneut geprüft. Die Aufreißkräfte stiegen deutlich stärker an, bei der letzten Entformung wurden 14,4 kN gemessen. Die Polyalformulierung war durch ausgefallenes Zinkstearat getrübt.

Beispiel 3 (Vergleich)

| | |
|---|---|
| 1,80 | Gew.-Teile Zinkstearat des in Beispiel 1 verwendeten Typs werden in |
| 1,80 | Gew.-Teilen eines bifunktionellen mit primären Aminogruppen terminierten Polyethers vom ungefähren Molgewicht 400 (Texaco's Jeffamine D 400) gelöst und mit |
| 74,98 | Gew.-Teilen eines Polyethers der OH-Zahl 28, der durch Addition von Propylenoxid und anschließende Addition von Ethylenoxid an Trimethylolpropan erhalten wurde (Gewichtsverhältnis PO:EO = 83:17), |
| 20,70 | Gew.-Teilen einer Mischung aus 65 Gew.-Teilen 1-Methyl-3,5-diethylphenylendiamin-(2,4) und 35 Teilen 1-Methyl-3,5-diethylphenylendiamin-(2,6), |
| 0,18 | Gew.-Teilen Dimethylzinndilaurat und |
| 0,54 | Gew.-Teilen 1,4-Diazabicyclo-(2.2.2)-octan als 33 %ige Lösung (DABCO 33 LV, Air Products) |

zu einer klaren Polyolkomponente vereinigt und mit 56,2 Gew.-Teilen eines Umsetzungsproduktes aus Tripropylenglykol und 4,4'-Diphenylmethandiisocyanat (23 Gew.-% NCO) nach dem RSG-Verfahren verarbeitet.

Die Versuchsreihe wurde nach 26 Entformungen abgebrochen. Bei der letzten Entformung wurde eine Aufreißkraft von 13,2 kN gemessen. Weitere Formteile sind nicht zu entformen.

<u>Tabelle</u>

| Beispiel | Prüfung | Aufreißkraft (kN) 10. Formteil | 25. | 50. | Aussehen der Polyol-formulierung |
|---|---|---|---|---|---|
| 1 | direkt | 7,1 | 7,3 | 7,7 | klar |
| | nach 3 Tagen | 6,9 | 7,2 | 7,7 | klar |
| | nach 3 Wochen | 6,3 | 8,0 | 10,9 | klar |
| 2 | direkt | 5,6 | 8,0 | 11,0 | klar |
| | nach 1 Tag | 6,1 | 9,2 | 14,4 | trübe, Sediment |
| 3 | direkt | 8,1 | 12,8 | - | klar |
| | nach 1 Tag | - | - | - | trübe, Sediment |

## Ansprüche

1. Trennmittelkomposition bestehend im wesentlichen aus einer bei Raumtemperatur flüssigen Lösung von
   (i) mindestens einem Zinksalz einer verzweigten oder unverzweigten, gesättigten oder ungesättigten aliphatischen Carbonsäure mit 8 - 24 Kohlenstoffatomen in
   (ii) mindestens einer bei Raumtemperatur flüssigen, tertiäre Stickstoffatome aufweisenden organischen Verbindung, wobei das Zinksalz in einer Menge von 10-75 Gew.-%, bezogen auf das Gesamtgewicht der Komposition, vorliegt, dadurch gekennzeichnet, daß die Komponente (ii) aus mindestens einer Verbindung der Formel

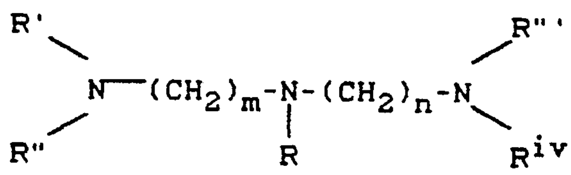

   besteht, in welcher
   R', R'', R''' und $R^{iv}$ für gleiche oder verschiedene Reste stehen und Alkylreste mit 1-4 Kohlenstoffatomen bedeuten, oder wobei jeweils zwei der Reste R' und R'' bzw. R''' und $R^{iv}$ zusammen mit dem Stickstoffatom einen, gegebenenfalls ein Sauerstoffatom oder ein Alkyl-substituiertes Stickstoffatom als Heteroatome aufweisenden heterocyclischen Ring mit 6 Ringatomen und insgesamt 4 oder 5 Kohlenstoffatomen bilden können,
   R für Wasserstoff oder einen Rest der Formel
   $-(CH_2)_o-NH_2$
   steht, und
   m, n und o für gleiche oder verschiedene ganze Zahlen von 2 bis 6 stehen.

2. Trennmittelkomposition gemäß Anspruch 1, dadurch gekennzeichnet, daß es sich bei der Komponente (i) um Zinkstearat und bei der Komponente (ii) um eine Verbindung der in Anspruch 1 genannten Formel handelt, für welche
   R', R'', R''' und $R^{iv}$ jeweils für Methylreste stehen,
   R für Wasserstoff und
   m und n für gleiche Zahlen stehen und 2 oder 3 bedeuten.

3. Als Reaktionspartner für organische Polyiisocyanate geeignetes Gemisch, bestehend aus
   a) mindestens einer organischen Verbindung mit mindestens 2 gegenüber Isocyanatgruppen reaktionsfähigen Gruppen des Molekulargewichtsbereichs 400 -12.000,
   b) mindestens einer im Sinne der Isocyanat- Additionsreaktion difunktionellen, organischen Verbindung mit gegenüber Isocyanatgruppen reaktionsfähigen Wasserstoffatomen des Molekulargewichtsbereichs 62-399, in einer Menge von 5-50 Gew.-%, bezogen auf das Gewicht der Komponente a),
   c) mindestens einem Formtrennmittel und gegebenenfalls
   d) weiteren, an sich bekannten Hilfs- und Zusatzmitteln,

   dadurch gekennzeichnet, daß es sich bei der Komponente c) um eine Trennmittelkomposition gemäß Anspruch 1 handelt, wobei die Trennmittelkomposition in einer solchen Menge vorliegt, daß in dem Gemisch pro 100 Gew.-Teile der Komponente a) 0,5-10 Gew.-Teile Zinkstearat vorliegen.

4. Gemisch gemäß Anspruch 3, dadurch gekennzeichnet, daß
   die Komponente a) aus mindestens einem Polyether des Molekulargewichtsbereichs 1.800-12.000 besteht, der insgesamt 2 oder 3 gegenüber Isocyanatgruppen reaktionsfähige Gruppen, ausgewählt aus der Gruppe bestehend aus primären alkoholischen Hydroxylgruppen, sekundären alkoholischen Hydroxylgruppen und primären Aminogruppen, aufweist,

die Komponente b) aus 1-Methyl-3,5-diethyl-2,4-diaminobenzol oder einem Gemisch aus diesem Diamin mit 1-Methyl-3,5-diethyl-2,6-diaminobenzol mit einem Gehalt von bis zu 35 Gew.-% des letzgenannten Isomeren besteht, und

die Komponente c) aus einer Trennmittelkomposition gemäß Anspruch 2 besteht.

**5.** Verfahren zur Herstellung von elastischen Formkörpern mit einer geschlossenen Oberflächenschicht aus Polyurethan- oder Polyharnstoffelastomeren durch Umsetzung in geschlossenen Formen eines Reaktionsgemisches aus

A) einer Polyisocyanatkomponente, bestehend aus mindestens einem Di- oder Polyisocyanat mit ausschließlich aromatisch gebundenen Isocyanatgruppen mit

B) einer innere Formtrennmittel und Verbindungen mit gegenüber Isocyanatgruppen reaktionsfähigen Gruppen, sowie gegebenenfalls weitere Hilfs- und Zusatzmittel enthaltenden Reaktionskomponente, dadurch gekennzeichnet, daß man als Komponente B) Gemische gemäß Anspruch 3 oder 4 verwendet.

**6.** Verfahren gemäß Anspruch 5, dadurch gekennzeichnet, daß man als Komponente A) bei Raumtemperatur flüssige, gegebenenfalls Urethan- und/oder Carbodimid-und/oder Uretonimingruppen aufweisende Polyisocyanate oder Polyisocyanatgemische der Diphenylmethanreihe verwendet.

**7.** Gemäß Anspruch 5 und 6 erhaltene Formkörper.

## Claims

**1.** A mould release composition substantially consisting of a solution, which is liquid at room temperature, of

(i) at least one zinc salt of a branched or unbranched 1 saturated or unsaturated aliphatic carboxylic acid having 8 to 24 carbon atoms in

(ii) at least one organic compound which contains tertiary nitrogen atoms and is liquid at room temperature, the zinc salt being present in a quantity of from 10-75% by weight, based on the total weight of the composition, characterised in that component (ii) consists of at least one compound corresponding to the following formula

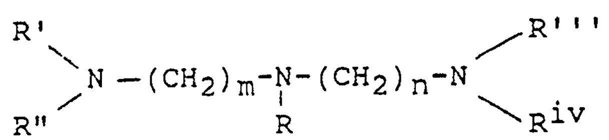

in which

$R^1$, $R^{11}$, $R^{111}$ and $R^{iv}$ are identical or different and stand for alkyl groups with 1 to 4 carbon atoms or at least two of the groups $R^1$ and $R^{11}$ or $R^{111}$ and $R^{iv}$ together with the nitrogen atom may form a heterocyclic ring with 6 ring atoms and a total of 4 or 5 carbon atoms optionally containing an oxygen atom or an alkyl substituted nitrogen atom as hetero atoms,

R stands for hydrogen or a group of the formula

$-(CH_2)_0-NH_2$

and

m, n and 0 stand for identical or different integers from 2 to 6.

**2.** Mould release composition according to Claim 1, characterised in that component (i) is a zinc stearate and component (ii) is a compound of the formula mentioned in Claim 1 in which

R', R'', R''' and $R^{iv}$ each stand for a methyl group,

R stands for hydrogen and

m and n are identical and stand for 2 or 3.

**3.** A mixture suitable as reactant for organic polyisocyanates, consisting of

a) at least one organic compound in the molecular weight range of from 400 to 12,000 having at least two isocyanate reactive groups,

b) at least one organic compound in the molecular weight range of from 62 to 399 which contains

isocyanate reactive hydrogen atoms and is difunctional in isocyanate addition reactions, in a quantity from 5 to 50% by weight, based on the weight of component a),
c) at least one mould release agent and optionally
d) other, known auxiliary agents and additives, characterised in that component c) is a mould release composition according to Claim 1 present in such a quantity that the mixture contains from 0.5 to 10 parts by weight of zinc stearate per 100 parts by weight of component a).

**4.** A mixture according o Claim 3, characterised in that
component a) consists of at least one polyether in the molecular weight range of from 1800 to 12,000 which has a total of two or three isocyanate reactive groups selected from primary alcoholic hydroxyl groups, secondary alcoholic hydroxyl groups and primary amino groups,
component b) consists of 1-methyl-3,5-diethyl-2,4-diaminobenzene or a mixture of this diamine with 1-methyl-3,5-diethyl-2,6-diaminobenzene containing up to 35% by weight of the last mentioned isomer and
component c) consists of a mould release composition according to Claim 2.

**5.** A process for the production of elastic moulded articles having a non-cellular surface layer of polyurethane or polyurea elastomers by the reaction, inside closed moulds, of a reaction mixture of
A) a polyisocyanate component consisting of at least one di- or polyisocyanate containing exclusively aromatically bound isocyanate groups with
B) a reactant containing internal mould release agents and compounds containing isocyanate reactive groups and optionally other auxiliary agents and additives, characterised in that mixtures according to Claim 3 or 4 are used as component B).

**6.** A process according to Claim 5, characterised in that the compounds used as component A) are polyisocyanates or polyisocyanate mixtures of the diphenylmethane series which are liquid at room temperature and optionally contain urethane and/or carbodiimide and/or uretoneimine groups.

**7.** Moulded products obtained according to Claims 5 and 6.

## Revendications

**1.** Composition d'un agent de démoulage constituée essentiellement d'une solution liquide à température ambiante de
i) au moins un sel de zinc d'un acide carboxylique aliphatique saturé ou non, ramifié ou non avec 8 - 24 atomes de carbone; dans
ii) au moins un composé organique liquide à température ambiante présentant des atomes d'azote tertiaires, où le sel de zinc est présent dans une proportion de poids de 10 - 75 % par rapport au poids total de la composition, caractérisée en ce que le composant ii) comporte au moins un composé de la formule

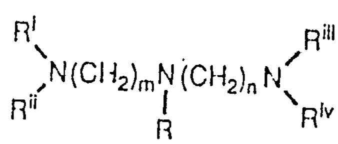

dans laquelle

R', R", R''' et $R^{IV}$ représentent des substituants identiques ou différents et désignent des groupes alkyles avec 1-4 atomes de carbone, ou bien où deux des substituants R' et R" ou R''' et $R^{IV}$ peuvent former ensemble avec l'atome d'azote un composé hétérocyclique avec 6 atomes cycliques et au total 4 ou 5 atomes de carbone présentant éventuellement comme hétéroatome un atome d'oxygène ou un atome d'azote substitué par un alkyle,
R représente l'hydrogène ou un groupe de formule
$-(CH_2)_o-NH_2$
et

m, n et o représentent des nombres entiers égaux ou non de 2 à 6

**2.** Composition d'un agent de démoulage selon la revendication 1, caractérisée en ce que le composant i) est un stéarate de zinc et le composant ii) un composé de la formule énoncée à la revendication 1, pour laquelle
R', R'', R''' et $R^{iv}$ représentent des groupes méthyle
R représente l'hydrogène et
m et n représentent des nombres égaux et signifient 2 ou 3

**3.** Mélange convenant comme partenaire réactif au polyisocyanate organique, composé de
a) au moins un composé organique avec au moins deux groupes réagissant avec des groupes isocyanate d'un poids moléculaire de l'ordre de 400 à 12.000
b) d'au moins un composé organique difonctionnel dans le sens de la réaction d'addition d'isocyanate, avec des atomes d'hydrogène réagissant avec les groupes isocyanate, d'un poids moléculaire de l'ordre de 62 à 399, présent dans une proportion de 5 - 50 % en poids par rapport au poids du composant a),
c) d'au moins un agent de démoulage, et éventuellement
d) d'autres adjuvants et additifs connus, caractérisé en ce que le composant c) est une composition d'agent de démoulage selon la revendication 1 où la composition de l'agent de démoulage est présente en quantité telle qu'elle contient 0,5 à 10 parts en poids de stéarate de zinc pour 100 parts en poids de composant a).

**4.** Mélange selon la revendication 3, caractérisé en ce que
le composant a) se compose d'au moins un polyéther d'un poids-moléculaire de l'ordre de 1.800 à 12.000 qui présente au total 2 ou 3 groupes réagissant avec les groupes isocyanate, choisi dans le groupe composé des groupes hydroxyle alcooliques primaires, des groupes hydroxyle alcooliques secondaires et des groupes amino primaires,
le composant b) se compose de 1-méthyl-3,5-diéthyl-2,6-diaminobenzène ou d'un mélange de cette diamine avec le 1-méthyl-3,5-diéthyl-2,6-diaminobenzène avec une teneur de 35 % en poids maximum de l'isomère mentionné en dernier lieu et
le composant c) est constitué d'une composition d'agent de démoulage selon la revendication 2.

**5.** Procédé de fabrication de formes élastiques avec une couche superficielle fermée en élastomère de polyuréthane ou polycarbamide par transformation dans des moules fermés d'un mélange réactif de
A) un composant polyisocyanate, constitué d'au moins un diisocyanate ou un polyisocyanate avec des groupes isocyanate liés exclusivement à des radicaux aromatiques avec
B) un agent de démoulage interne et des composés avec des groupes réagissant avec les groupes isocyanate ainsi que, le cas échéant, d'autres éléments réactifs contenant des adjuvants et des additifs, caractérisé en ce que des mélanges selon la revendication 3 ou 4 sont utilisés comme composant B).

**6.** Procédé selon la revendication 5, caractérisé en ce que des polyisocyanates ou des mélanges de polyisocyanates liquides à température ambiante de la série des diphénylméthanes, comportant le cas échéant des groupes uréthane et/ou carbodimide et/ou urétonimine sont utilisés comme composant A).

**7.** Formes ou corps moulés élastiques obtenus selon les revendications 5 et 6.